Europäisches Patentamt

European Patent Office

Office européen des brevets

(19)

(11) Veröffentlichungsnummer: **0 084 838**
**B1**

(12)  **EUROPÄISCHE PATENTSCHRIFT**

(45) Veröffentlichungstag der Patentschrift:
**08.01.86**

(21) Anmeldenummer: **83100368.6**

(22) Anmeldetag: **17.01.83**

(51) Int. Cl.⁴: **C 09 K 3/14, B 24 D 3/00**

(54) **Poliermittel zur Zentrifugal-Magnetschleifbearbeitung.**

(30) Priorität: **18.01.82 BG 55024/82**

(43) Veröffentlichungstag der Anmeldung:
**03.08.83 Patentblatt 83/31**

(45) Bekanntmachung des Hinweises auf die Patenterteilung:
**08.01.86 Patentblatt 86/2**

(84) Benannte Vertragsstaaten:
**AT BE CH DE FR GB IT LI SE**

(56) Entgegenhaltungen:
**FR - A - 1 108 480**
**FR - A - 1 489 047**
**US - A - 2 482 667**

(73) Patentinhaber: **ZENTRALEN MASCHINOSTROITELEN INSTITUT, 12, Boul. Ho Shi Min, BG-1156 Sofia (BG)**

(72) Erfinder: **Makedonski, Boris Georgiev, 50, Ekzarh Yossif Str., Sofia (BG)**
Erfinder: **Atanassov, Haralampi Angelov, Block 134-1, G. Avramov Str., Sofia (BG)**
Erfinder: **Todorov, Nedelcho Hristov, 40, B. Cholev Str., Sofia (BG)**
Erfinder: **Petrov, Peter Kirilov, 10, Iv. Radoynov Str., Sofia (BG)**

(74) Vertreter: **von Füner, Alexander, Dr. et al, Patentanwälte v. Füner, Ebbinghaus, Finck Mariahilfplatz 2 & 3, D-8000 München 90 (DE)**

## Beschreibung

Die Erfindung bezieht sich auf ein Poliermittel zum Einsatz mit Zentrifugal-Magnetschleifmaschinen bei der Bearbeitung von vorwiegend aus NE-Metallen und -Legierungen hergestellten Werkstücken mit komplizierter Form.

Bekannt sind Poliermittel für Magnet-Schleifbearbeitung (1), bestehend aus Cermet-Staub und getrennt eingegebene Schmier- und Kühlflüssigkeit. Der Cermet-Staub besteht in den meisten Fällen aus einer nach spezieller Technologie hergestellten Mischung von Eisenstaub und Schleifmitteln. Beim Einsatz dieser Cermeten mit einer entsprechenden Schmier- und Kühlflüssigkeit wird unter den Bedingungen eines Magnet-Schleifvorgangs in relativ kurzer Zeit eine hohe Glätte der bearbeiteten Oberfläche erreicht. Ein Nachteil der Cermet-Mischungen besteht darin, dass sie in kombinierten Magnetschleif- und Zentrifugalmaschinen nicht einzusetzen sind. Dies ist hauptsächlich auf den hohen Verdichtungsgrad der Cermeten in der Poliertrommel zurückzuführen, wobei ein Eintauchen des Werkstücks in den Arbeitsbereich unmöglich ist. Dieser Verdichtungseffekt wird besonders durch das Vorhandensein eines starken Magnetfeldes verstärkt.

Bekannt sind Poliermittel für das Zentrifugal-Magnetschleifen (2), vorwiegend auf der Basis eines leichten Trägers der Schleifkomponente. Als leichte Träger kommen dabei Holzspäne, Kunststoffperlen, Kugeln aus Styropor usw. zum Einsatz. Mit diesen Poliermitteln werden relativ gut diverse Werkstücke aus Eisen- und NE-Metallen poliert. Ein wesentlicher Nachteil ist jedoch, dass sie bei kombinierten Magnetschleif- und Zentrifugalmaschinen nicht einzusetzen sind, da sie keine ferromagnetische Komponente beinhalten und dabei nicht imstande sind sich zu verdichten, an die bearbeiteten Oberflächen zu orientieren und anzupassen und die Spur der Werkstücke im Schleifmedium selbständig zu löschen. Dies bedingt das Einbauen von komplizierten kinematischen Bewegungen im Zentrifugal-Schleifvorgang.

Aufgabe der Erfindung ist es, ein Poliermittel zum Einsatz in Zentrifugal-Magnetschleifmaschinen für das Polieren von vorwiegend aus NE-Metallen und -Legierungen hergestellten Werkstücken mit komplizierter Form zu schaffen, das in kombinierten Magnetschleif- und Zentrifugalmaschinen einsetzbar ist und durch das sich eine hohe Glätte der bearbeiteten Oberflächen bei relativ niedriger Geschwindigkeit der zentrifugalen Verdichtung und niedrigen Werten des Magnetfeldes erzielen lässt.

Die Aufgabe wird durch ein Poliermittel gelöst, das aus 1) 84 bis 86 Anteilen einer Mischung aus Schleifmittelkörner und Eisenstaub, 2) 4 bis 6 Anteilen einer Mischung aus $Cr_2O_3$, Stearin und Oleinsäure, 3) 4 bis 6 Anteilen gemahlener Obstkerne oder Holzspäne und 4) 4 bis 6 Anteilen einer 3prozentigen wässrigen Lösung von Triäthanolaminseife berechnet auf 100 zusammengesetzt ist. Dabei beträgt für 1) der Schleifmittelkörneranteil 16 bis 20% bei einer Korngrösse 5 bis 40 µm, und der Eisenstaub 84 bis 80%. Für 2) beträgt der $Cr_2O_3$-Anteil 55 bis 57% bei einer Korngrösse von 1 bis 10 µm, der Stearinanteil 37 bis 39% und der Oleinsäureanteil 5 bis 7%.

Die Vorteile der Erfindung sind: Das Mittel ist ferromagnetisch und kann in sämtlichen Zentrifugal- und Magnetschleifmaschinen, und insbesondere in den kombinierten Zentrifugal-Magnetschleifmaschinen eingesetzt werden; beim Einsatz des Mittels wird ein hohes Glätten der bearbeiteten Oberflächen bei relativ niedrigen Geschwindigkeiten der zentrifugalen Verdichtung und niedrigen Werten des Magnetfeldes erzielt.

Die Erfindung lässt sich näher anhand eines im folgenden angeführten, aus vier Komponenten bestehenden Mittels sehr gut erläutern:

*Beispiel*

Cermet-Mischung, ca. 85 Teile des Mittels bestehend aus 16% Schleifmittelkörner mit einer Korngrösse von 5 bis 40 µm, wobei die genaue Korngrösse in Abhängigkeit von der Härte der bearbeiteten Werkstoffe festgelegt wird (hoher Härtegrad = grosse Körner und umgekehrt) und Eisenstaub 84%. Der Aufbereitungszyklus der Cermet-Mischung schliesst das Vermischen, Pressen, Sintern, Zerkleinern und Mahlen ein;

Poliermittel, 5 Teile bestehend aus 56% $Cr_2O_3$, bei einer Korngrösse bis 10 µm, 38% Stearin und 6% Oleinsäure;

Füllstroff, ca. 5 Teile bestehend aus gemahlenen Holzspänen, Obstkernen;

3prozentige wässrige Lösung von Triäthanolaminseife, 5 Teile.

Das Poliermittel wird wie folgt aufbereitet:

Die Cermet-Mischung wird in bekannter Weise hergestellt und nach Erwärmung auf 60 bis 80°C in das Stearin und $Cr_2O_3$ (zweite Komponente) eingegeben. Die Mischung wird gut vermischt und homogenisiert. Nach Abkühlung wird der Füllstoff zugegeben. Die Benetzungskomponente wird bei der Beschickung direkt in die Maschine eingegeben.

## Patentansprüche

1. Poliermittel zum Einsatz in Zentrifugal-Magnetschleifmaschinen für die Bearbeitung von Werkstükken mit komplizierter Form, dadurch gekennzeichnet, dass es 84 bis 86% einer Mischung aus Schleifmittelkörner und Eisenstaub, 4 bis 6% einer Mischung aus $Cr_2O_3$, Stearin und Oelinsäure, 4 bis 6% gemahlener Obstkerne oder Holzspäne und 4 bis 6% 3prozentiger wässriger Lösung von Triäthanolaminseife enthält.

2. Poliermittel gemäss Anspruch 1, dadurch gekennzeichnet, dass der Schleifmittelkörneranteil 16 bis 20% bei einer Korngrösse von 4 bis 40 µm und der Eisenstaubanteil 84 bis 80% berechnet auf die erste Komponente beträgt.

3. Poliermittel gemäss Anspruch 1, dadurch gekennzeichnet, dass der $Cr_2O_3$-Anteil bei einer Korngrösse von 1 bis 10 µm 55 bis 57%, der Stearinanteil 37 bis 39% und der Oleinsäureanteil 5 bis 7% berechnet auf die zweite Komponente beträgt.

Literaturnachweis:
1. Bljumberg V.A., Ju. M. Baron, Z.I. Kremen' i B.P. Grochol'skij: «Abrazivnyi material dlja magnitoabrazivnoj obrabotki» SU-PS 234 184, cl. B 24.
2. «Abrazivy», Naučno-techničeskij referativnyj sbornik. 1974, vyp. 1.

## Claims

1. A polishing composition for using in magneto-centrifugal grinding machines for the treatment of workpieces having a complicated shape, characterized by containing from 84 to 86% of a mixture of abrasive grains and iron dust, from 4 to 6% of a mixture of $Cr_2O_3$, stearine and oleic acid, from 4 to 6% of crushed fruit stones or wood chips and from 4 to 6% of a 3% aqueous solution of triethanolamine soap.

2. The polishing composition according to claim 1, characterized in that the portion of abrasive grains of a grain size of from 5 to 40 μm is from 16 to 20% and the portion of iron dust is from 84 to 80%, relative to the first component.

3. The polishing composition according to claim 1, characterized in that the portion of $Cr_2O_3$, having a grain size of from 1 to 10 μm, is from 55 to 57%, the portion of stearine is from 37 to 39% and that of oleic acid is from 5 to 7%, relative to the second component.

## Revendications

1. Agent à polir pour l'utilisation dans des machines à meuler centrifuges à aimant pour le traitement de pièces d'ouvrage de forme compliquée, caractérisé en ce qu'il contient de 84 à 86% d'un mélange de grains d'abrasif et de poudre de fer, de 4 à 6% d'un mélange de $Cr_2O_3$, de stéarine et d'acide oléique, de 4 à 6% de noyaux de fruits moulus ou de copeaux et de 4 à 6% de solution aqueuse 3% de savon de triéthanolamine.

2. L'agent à polir de la revendication 1, caractérisé en ce que la portion de grains d'abrasif est de 16 à 20%, la grandeur des grains étant de 5 à 40 μm, et que la portion de poudre de fer est de 84 à 80% relatif à la première composante.

3. L'agent à polir de la revendication 1, caractérisé en ce que la portion de $Cr_2O_3$ est de 55 p 57%, la grandeur des grains étant de 1 à 10 μm, que la portion de stéarine est de 37 à 39% et que la portion d'acide oléique est de 5 à 7%, relatif à la deuxième composante.